# EUROPEAN PATENT SPECIFICATION

(11) **EP 3 798 066 B1**
(45) Date of publication and mention of the grant of the patent: **27.04.2022**
(21) Application number: 20193998.0
(22) Date of filing: 02.09.2020
(51) Int. Cl.: B60S 1/34, B60S 1/52

(54) **WIPER ARM**
WISCHERARM
BRAS D'ESSUIE-GLACE

(30) Priority: 26.09.2019 JP 2019174958
(43) Date of publication of application: 31.03.2021
(73) Proprietor: Mitsuba Corporation, Kiryu-shi, Gunma 376-8555 (JP)
(72) Inventor: MACHIDA, Ken, Gunma, 3768555 (JP); NAKAJIMA, Nobutaka, Gunma, 3768555 (JP)
(74) Representative: Becker, Eberhard

(56) References cited:
- EP-A1- 3 138 744
- FR-A1- 3 023 772
- JP-A- 2006 007 971
- JP-A- 2016 203 713

## Description

### BACKGROUND

### Technical Field

The disclosure relates to a wiper arm disposed in a wiper device for wiping a surface to be wiped.

### Description of Related Art

A wiper device is mounted on a vehicle such as an automobile. The wiper device includes a wiper motor that is a driving source, a wiper arm that is swung when driven by the wiper motor, and a wiper blade that is attached to the wiper arm.

For an example of the wiper arm as described above, there is known a wiper arm provided with a washer nozzle for ejecting a washer liquid onto a surface to be wiped and a tube for supplying the washer liquid to the washer nozzle.

For an example of the wiper arm provided with the washer nozzle and the tube as described above, Patent Document 1 discloses a wiper arm in which the tube is fixed with a plurality of fixing members such as a first holder and a second holder.

### Related Art

### Patent Document

[Patent Document 1] Japanese Laid-open No. 2016-203713
[Patent Document 2] Japanese Laid-open No. 2006 007971 A

### SUMMARY

### Technical Problem

The wiper arm disclosed in the above Patent Document 1 is provided with a plurality of fixing members such as the first holder and the second holder for fixing the tube, and as a result, there is a problem that the number of parts increases. Patent Document 2 discloses the preamble of claim 1.

In addition, there is a concern that the tube and the like inside the shank may be seen from the passenger compartment, and there is a problem in the designability of the wiper arm.

The disclosure provides a wiper arm in which the number of parts is reduced and the tube can be easily fixed.

### Solution to the Problem

The invention is set out in the appended set of claims.

According to an aspect of the disclosure, a wiper arm includes an arm head; a shank including a pair of side walls connected to a tip end of the arm head and facing each other and a top wall connected to an upper end part of each of the side walls; a tube disposed inside the shank; and a bottom cover joined to a lower end part of each of the side walls and facing the top wall. The bottom cover includes a body part in a plate shape and a holding part which is provided in a protruding way on an edge of a hole part formed in the body part in a width direction of the shank and which holds the tube. In addition, the holding part includes a first wall part which is provided at the edge and which protrudes toward the top wall and a second wall part which is connected to the first wall part and which is disposed above the hole part.

According to another aspect of the disclosure, the tube has an ejection hole for ejecting a washer liquid, and the ejection hole is disposed at a position facing the hole part.

According to another aspect of the disclosure, the first wall part is provided closer to an inner side than the hole part in the width direction of the shank, and the second wall part extends from the first wall part to an outer side in the width direction of the shank.

According to another aspect of the disclosure, the first wall part is provided closer to an outer side than the hole part in the width direction of the shank, and the second wall part extends from the first wall part to an inner side in the width direction of the shank.

According to another aspect of the disclosure, the holding part has the first wall part, the second wall part, and a third wall part provided closer to the inner side than the hole part in the width direction of the shank, and the hole part is formed between the first wall part and the third wall part.

According to another aspect of the disclosure, a through hole which communicates with the hole part is formed in one of the first wall part and the third wall part that is located on the outer side in the width direction of the shank.

According to another aspect of the disclosure, the tube includes a flat surface which is in contact with the third wall part.

### Effects

According to the disclosure, since the shank includes the bottom cover, and the bottom cover is provided with the holding part for holding the tube, it is possible to reduce the number of parts and facilitate fixing of the tube.

Further, since the shank is provided with the bottom cover, the designability of the wiper arm can be improved.

### BRIEF DESCRIPTION OF THE DRAWINGS

FIG. 1 is a perspective view showing an appearance structure of a wiper arm of the disclosure.
FIG. 2 is a perspective view showing a structure of a wiper arm of a first embodiment on a bottom cover side.
FIG. 3 is a partial perspective view showing the structure cut along the line A-A in FIG. 2.
FIG. 4 is a cross-sectional view showing the structure of the shank taken along the line A-A of FIG. 2.
FIG. 5 is a cross-sectional view showing a structure of a shank of a wiper arm according to a modified example of the first embodiment.
FIG. 6 is a cross-sectional view showing a structure of tubes and a shank of a wiper arm according to a second embodiment.
FIG. 7 is a cross-sectional view showing a structure of a shank of a wiper arm according to a modified example of the second embodiment.
FIG. 8 is a view showing a structure of a shank of a wiper arm according to a third embodiment and is a partial perspective view showing the structure cut along the line B-B in FIG. 2.
FIG. 9 is a view showing a structure of a shank of a wiper arm according to a first modified example of the third embodiment and is a partial perspective view showing the structure cut along the line B-B in FIG. 2.
FIG. 10 is a view showing a structure of a shank of a wiper arm according to a second modified example of the third embodiment and is a partial perspective view showing the structure cut along the line B-B in FIG. 2.

### DESCRIPTION OF THE EMBODIMENTS

Hereinafter, each embodiment of the disclosure will be described in detail with reference to the drawings.

### (First Embodiment)

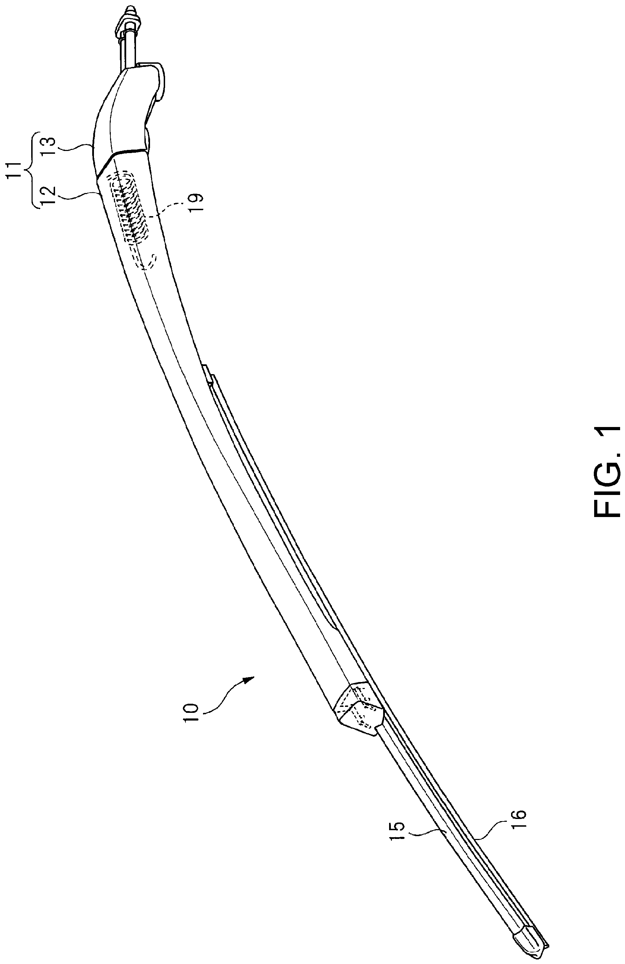

A wiper device 10 shown in FIG. 1 is, for example, a device for wiping a surface to be wiped such as a rear glass provided in a vehicle such as an automobile. The wiper device 10 includes a wiper arm 11 having a long and narrow arm shank (shank) 12, a wiper blade 15 having a blade rubber 16 for wiping the surface to be wiped, and a connecting member (not shown) for connecting the wiper arm 11 and the wiper blade 15.

The wiper arm 11 includes the arm shank 12 and an arm head 13 that rotatably supports the arm shank 12.

In addition, the wiper blade 15 is rotatably connected to the vicinity of a center part of the arm shank 12 in the longitudinal direction via the connecting member. Further, an output shaft (not shown) of a wiper motor forming the wiper device 10 is fixed to the base end side of the wiper arm 11.

Then, by turning on a wiper switch provided in a passenger compartment or the like, the output shaft of the wiper motor rotates in forward and reverse directions, and the wiper arm 11 swings. As a result, the blade rubber 16 attached to the wiper blade 15 performs a back-and-forth wiping operation within a predetermined wiping range of the surface to be wiped such as the rear glass, whereby rainwater and the like adhering to the surface to be wiped such as the rear glass is wiped.

The wiper arm 11 is, for example, formed in a rod shape by injection-molding a resin material such as plastic, and the thickness of the wiper arm 11 on the tip end side is formed to be smaller than the thickness on the base end side. More specifically, the wiper arm 11 is formed in a tapered shape that gradually becomes thinner from the base end side toward the tip end side. This improves the design property of the wiper arm 11. However, the appearance shape of the wiper arm 11 is not limited to the above-described shape.

Further, a pressing force acts on the arm shank 12 of the wiper arm 11 in a direction of tilting the arm shank 12 toward the surface to be wiped such as the rear glass. Therefore, during the back-and-forth wiping operation of the wiper blade 15, the wiper blade 15 is unlikely to fall out. Further, the pressing force is generated by a spring force of a spring 19 for pulling provided on the base end side of the arm shank 12.

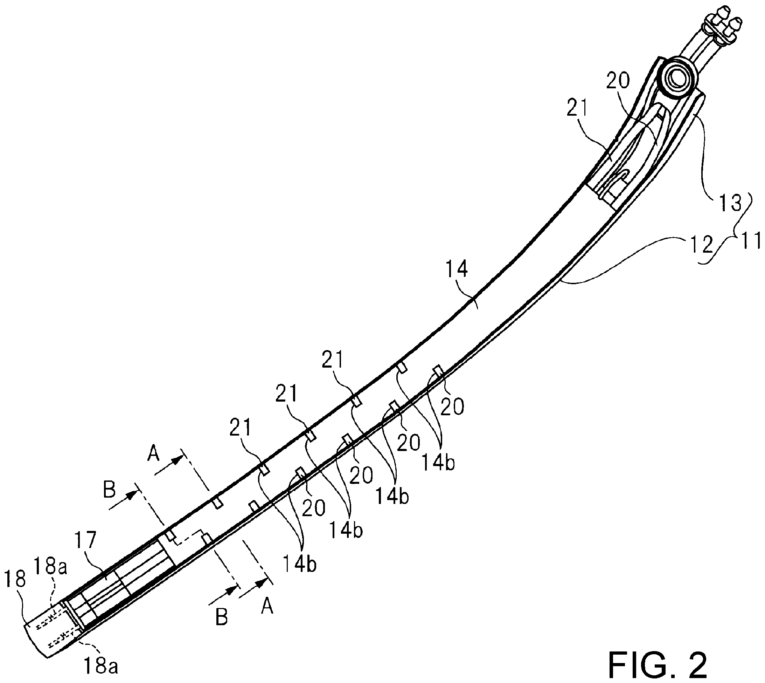

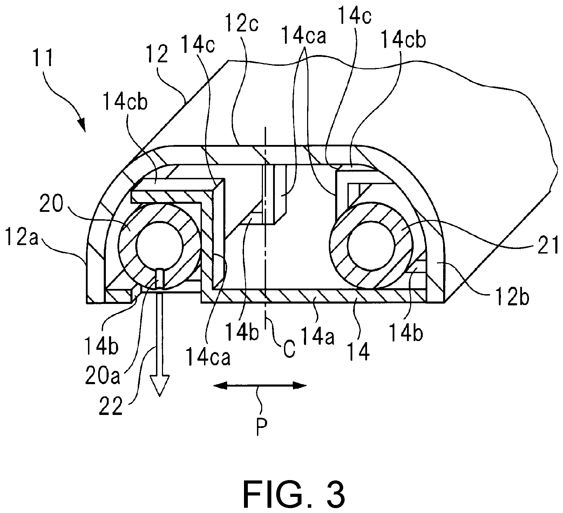

Here, in the wiper arm 11 of the first embodiment, the arm shank 12 is connected to the tip end of the arm head 13. Then, as shown in FIG. 2, two tubes 20 and 21 for supplying a washer liquid 22 (see FIG. 3) are disposed inside the arm shank 12. That is, in the first embodiment, a case where the two tubes 20 and 21 are disposed inside the arm shank 12 is described as an example.

In addition, as shown in FIG. 3, the arm shank 12 includes a pair of side walls 12a and 12b facing each other, and a top wall 12c connected to the upper end part of each of the pair of side walls 12a and 12b. The top wall 12c is, for example, integrally formed with each of the side walls 12a and 12b. In other words, the arm shank 12 is a long and narrow plate-shaped member whose cross-sectional shape is a semi-cylindrical shape formed by the pair of side walls 12a and 12b facing each other and the top wall 12c.

The arm shank 12 further includes a bottom cover 14 which is joined to the lower end part of each of the pair of side walls 12a and 12b and which faces the top wall 12c. That is, the bottom cover 14 is disposed at the bottom of the plate-shaped semi-cylindrical arm shank 12, and the region surrounded by the arm shank 12 and the bottom cover 14 is a hollow part. Then, the two tubes 20 and 21 are disposed side by side in the hollow part surrounded by the arm shank 12 and the bottom cover 14. Since the bottom cover 14 is disposed at the bottom of the arm shank 12, the inside of the arm shank 12 is invisible even from the bottom surface side opposite to the top wall 12c. That is, since the bottom cover 14 is disposed at the bottom of the arm shank 12, the inside of the arm shank 12 may be hidden.

Further, as shown in FIG. 2, the bottom cover 14 is also formed to be long and narrow along the extending direction of the arm shank 12.

Further, a tip nozzle 18 is connected to the tip end part of the arm shank 12. Two ejection holes 18a are formed in the tip nozzle 18, and the tube 20 is connected to one of the ejection holes 18a, and the tube 21 is connected to the other of the ejection holes 18a. Therefore, in the washer liquid 22 (see FIG. 3) supplied respectively to the tubes 20 and 21, the washer liquid 22 that has reached the tip nozzle 18 is ejected to the outside from the two ejection holes 18a, respectively.

In addition, the respective parts of the two tubes 20 and 21 on the tip end side are held by a tube holder 17 located in the vicinity of the tip end of the arm shank 12. Further, the respective parts of the two tubes 20 and 21 on the base end side extend from the end part of the arm head 13 to the outside of the arm head.

Next, the detailed structure of the bottom cover 14 of the first embodiment will be described.

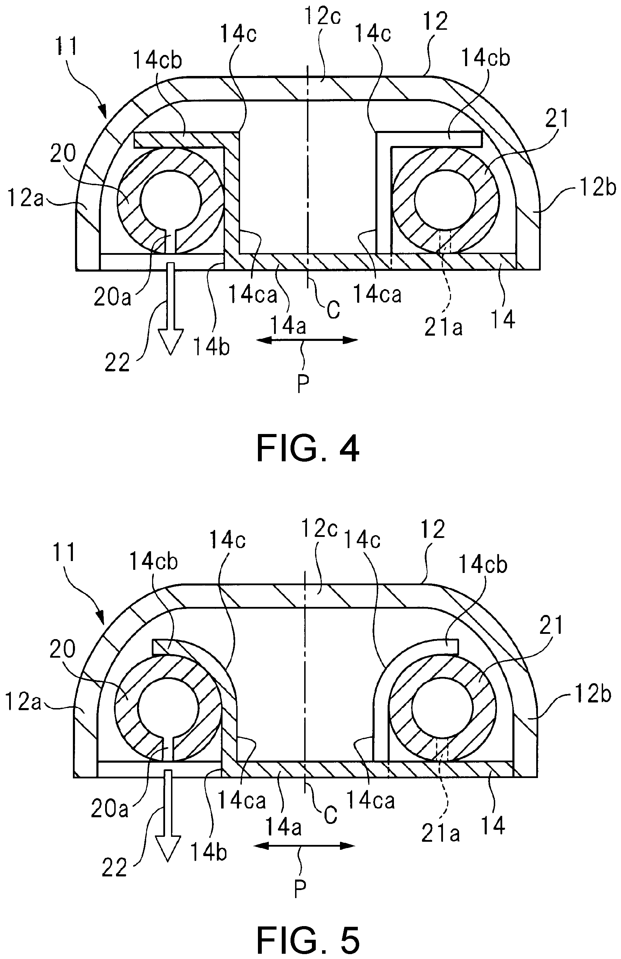

As shown in FIGs. 3 and 4, the bottom cover 14 has a function of holding each of the two tubes 20 and 21. Specifically, the bottom cover 14 includes a plate-shaped body part 14a and holding parts 14c which are provided in a protruding way on edges of hole parts 14b formed in the body part 14a in a width direction P of the arm shank 12 and which hold each of the tubes 20 and 21. Further, the holding part 14c of the bottom cover 14 of the first embodiment includes a first wall part 14ca whose one end is disposed on the edge of the hole part 14b of the holding part 14c, and a second wall part 14cb which is connected to the other end of the first wall part 14ca. The first wall part 14ca and the second wall part 14cb are integrally formed, for example.

Specifically, one end (lower end) of the first wall part 14ca is joined to the edge of the hole part 14b formed in the holding part 14c and protrudes toward the top wall 12c of the arm shank 12. Further, the second wall part 14cb is joined to the other end (upper end) of the first wall part 14ca and protrudes toward one of the pair of side walls 12a and 12b (one of the side wall 12a and the side wall 12b) disposed on the hole part 14b side with respect to the first wall part 14ca. In the structure shown in FIG. 4, the second wall part 14cb joined to the first wall part 14ca disposed on the left side in the drawing protrudes toward the side wall 12a disposed closer to the outer side than the second wall part 14cb. Further, the second wall part 14cb joined to the first wall part 14ca disposed on the right side in the drawing protrudes toward the side wall 12b disposed closer to the outer side than the second wall part 14cb. That is, the two second wall parts 14cb respectively protrude to the outer side, and the holding part 14c including the first wall part 14ca and the second wall part 14cb is formed in an inverted L shape.

In other words, the first wall part 14ca is disposed closer to a center C of the arm shank 12 than the hole part 14b in the width direction P of the arm shank 12, and the second wall part 14cb is disposed above the hole part 14b (the second wall part 14cb is disposed to face the hole part 14b).

Further, in the wiper arm 11 according to the first embodiment, the first wall part 14ca and the second wall part 14cb are integrally formed, and the plate-shaped body part 14a of the bottom cover 14 and the inverted L-shaped holding parts 14c including the first wall parts 14ca and the second wall parts 14cb are integrally formed.

Then, each of the tubes 20 and 21 is clamped and held by the second wall parts 14cb of the holding parts 14c and the bottom cover 14, and the movement of each of the tubes 20 and 21 in the width direction P of the arm shank 12 is restricted by the first wall parts 14ca which are standing walls and the side wall 12a or the side wall 12b. In this way, rattling of each of the tubes 20 and 21 in the width direction P of the arm shank 12 may be reduced by the first wall parts 14ca which are standing walls and the side wall 12a or the side wall 12b. Therefore, inside the arm shank 12, each of the two tubes 20 and 21 is held by the holding parts 14c formed on the bottom cover 14.

Further, since the first wall parts 14ca of the holding parts 14c are provided on the edges of the hole parts 14b of the bottom cover 14 and the tubes 20 and 21 are held by the holding parts 14c, ejection holes 20a and 21a of the tubes 20 and 21 shown in FIG. 4 are positioned with respect to the hole parts 14b.

Further, as shown in FIGs. 3 and 4, the open parts (the parts where walls are not formed and where the tubes 20 and 21 are attached with respect to the holding parts 14c) of the inverted L-shaped holding parts 14c face the outer side, and such holding parts 14c are hereinafter referred to as outward bending type holding parts 14c. Specifically, in the outward bending type holding part 14c, the first wall part 14ca is provided closer to the inner side than the hole part 14b in the width direction P of the arm shank 12, and the second wall part 14cb extends from the first wall part 14ca to the outer side in the width direction P of the arm shank 12. Therefore, in the outward bending type holding parts 14c, the open parts of the inverted L-shaped holding parts 14c face the outer side of the arm shank 12. In other words, the open parts of the inverted L-shaped holding parts 14c face the outer side in the direction along the width direction P of the arm shank 12. As a result, the tube 20 or the tube 21 may be attached with respect to the inverted L-shaped holding parts 14c along the width direction P of the arm shank 12.

As described above, the bottom cover 14 of the first embodiment has the function of holding the tubes 20 and 21 by the holding parts 14c and the function of keeping the inside invisible by the plate-shaped body part 14a.

Further, a plurality of the holding parts 14c of the bottom cover 14 according to the first embodiment are, as shown in FIG. 2, staggeringly (alternately) provided on the bottom cover 14 with respect to the respective extending directions of the two tubes 20 and 21 disposed side by side. The holding parts 14c are formed at positions of each of the plurality of hole parts 14b shown in FIG. 2. Further, in the case of this structure, the holding parts 14c and the hole parts 14b for the two tubes 20 and 21 are provided staggeringly (alternately) with respect to the respective extending directions of the two tubes 20 and 21. Therefore, as shown in FIG. 4, the holding parts 14c and the hole parts 14b provided on left and right on the bottom cover 14 are not provided side by side.

Further, as shown in FIGs. 3 and 4, the tube 20 is formed with the ejection holes 20a for ejecting the washer liquid 22, and similarly, the tube 21 is also formed with the ejection holes 21a for ejecting the washer liquid 22. In addition, the ejection holes 20a and 21a of the tubes 20 and 21 are disposed at positions facing the hole parts 14b formed in the bottom cover 14.

In this way, the washer liquid 22 supplied respectively to the tubes 20 and 21 is ejected from the ejection holes 20a and 21a, respectively, and is also ejected to the outside through the hole parts 14b of the bottom cover 14, and thus is sprayed on a window of an automobile such as a window glass.

According to the wiper arm 11 of the first embodiment, the arm shank 12 includes the bottom cover 14, and the holding parts 14c that hold the tubes 20 and 21 are integrally provided with the body part 14a on the bottom cover 14, whereby the tubes 20 and 21 may be held by the holding parts 14c, and the number of parts may be reduced. Further, since the tubes 20 and 21 are fixed simply by fitting the tubes 20 and 21 into the inverted L-shaped holding parts 14c, the tubes 20 and 21 may be easily fixed.

Further, since the arm shank 12 includes the bottom cover 14, and the bottom cover 14 is disposed at the bottom of the arm shank 12, the inside of the arm shank 12 may be hidden, and thus the tubes 20 and 21 provided inside the arm shank 12 may not be seen. As a result, the designability of the wiper arm 11 can be improved.

Further, the second wall part 14cb of the holding part 14c protrudes toward the side wall 12a or the side wall 12b of the arm shank 12, but the second wall part 14cb faces the hole part 14b formed in the body part 14a of the bottom cover 14. Therefore, when molding the bottom cover 14 by injection molding, the mold may be easily removed in the vertical direction, and the bottom cover 14 may be easily molded by injection molding.

Further, the bottom cover 14 is disposed at the bottom of the arm shank 12, and the hole parts 14b are formed in the bottom cover 14, and the ejection holes 20a and 21a of the tubes 20 and 21 are disposed at positions facing the hole parts 14b, respectively. As a result, the washer liquid 22 may be ejected from the hole parts 14b of the bottom cover 14 while the inside of the arm shank 12 may be hidden by the bottom cover 14. That is, the washer liquid 22 may be ejected from the wiper arm 11 while ensuring the designability of the wiper arm 11.

Further, since the first wall parts 14ca of the holding parts 14c are provided on the edges of the hole parts 14b of the bottom cover 14, the ejection holes 20a and 21a of the tubes 20 and 21 held by the holding parts 14c are positioned with respect to the hole parts 14b. In this way, the hitting point of the washer liquid 22 ejected from the ejection holes 20a and 21a is unlikely to shift, and the accuracy of the ejection position of the washer liquid 22 may be ensured.

In addition, since the tube 20 or the tube 21 may be attached with respect to the inverted L-shaped holding parts 14c of the bottom cover 14 from the lateral direction along the width direction P of the arm shank 12, the assembly of the tubes 20 and 21 may be performed easily. That is, the tubes 20 and 21 may be easily fixed.

Further, in the wiper arm 11 of the first embodiment, since the pair of side walls 12a and 12b of the arm shank 12 are used to fix the tubes 20 and 21, the movement of the tubes 20 and 21 in the width direction P of the arm shank 12 may be restricted without setting a new wall on the bottom cover 14. That is, rattling of the tubes 20 and 21 in the width direction P may be reduced by the holding parts 14c and the side wall 12a or the side wall 12b of the arm shank 12 without increasing the number of parts.

Further, since each of the ejection holes 20a of the tube 20 and the ejection holes 21a of the tube 21 is provided to eject the washer liquid 22 substantially perpendicularly to the surface to be wiped (glass of the automobile), it becomes unlikely for the driver to see the washer liquid 22, and the field of view of the driver may be improved.

Further, the ejection holes 20a and 21a of the tubes 20 and 21 and the holding parts 14c including the first wall parts 14ca and the second wall parts 14cb are provided at the same positions in the longitudinal direction of the bottom cover 14. Therefore, the deformation of the tubes 20 and 21 due to the water pressure of the washer liquid 22 (the deformation due to the force acting in the direction opposite to the ejection direction) may be suppressed more effectively. As a result, the ejection direction of the washer liquid 22 may be stabilized.

Next, a modified example of the first embodiment will be described. FIG. 5 shows the wiper arm 11 of a modified example of the first embodiment.

In the wiper arm 11 shown in FIG. 5, the holding part 14c including the first wall part 14ca and the second wall part 14cb provided on the bottom cover 14 is formed in an arc shape. At this time, the arc shape of the holding part 14c is a shape along the cylindrical outer peripheral shape of each of the tubes 20 and 21.

In this way, since the contact area of the outer peripheral surfaces of the tubes 20 and 21 with the holding parts 14c increases, the holding force for the tubes 20 and 21 by the holding parts 14c may be increased, and rattling or rotation of the tubes 20 and 21 may be reduced. As a result, the accuracy of the ejection position of the washer liquid 22 ejected from the ejection holes 20a and 21a of the tubes 20 and 21 may be further improved.

### (Second Embodiment)

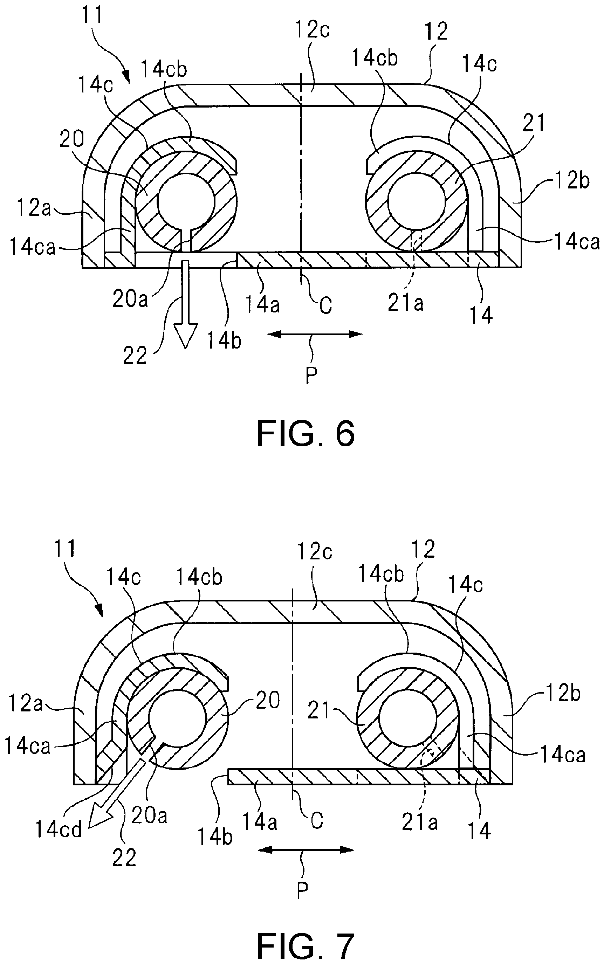

The wiper arm 11 according to a second embodiment will be described with reference to FIG. 6. The difference between the wiper arm 11 of the second embodiment and the wiper arm 11 of the first embodiment is that the protruding direction of the second wall part 14cb of the holding part 14c provided in the bottom cover 14 from the first wall part 14ca is different.

That is, in the wiper arm 11 of the second embodiment, as shown in FIG. 6, the second wall part 14cb protrudes toward the center C (inner side) in the width direction P of the arm shank 12. Specifically, the first wall part 14ca, which is a standing wall provided on the bottom cover 14, is provided at a position closer to the outer side than the hole part 14b in the width direction P of the arm shank 12. In other words, the first wall part 14ca is provided between the hole part 14b and the side wall 12a or between the hole part 14b and the side wall 12b.

Further, the second wall part 14cb protrudes toward the center C (inner side) in the width direction P of the arm shank 12 and is disposed above the hole part 14b. In other words, the second wall part 14cb is provided to face the hole part 14b.

The structure in which the second wall part 14cb provided on the first wall part 14ca protrudes to the inner wide in this way is hereinafter referred to as the inward bending type wiper arm 11. Specifically, in the inward bending type holding part 14c, the first wall part 14ca is provided closer to the outer side than the hole part 14b in the width direction P of the arm shank 12, and the second wall part 14cb extends from the first wall part 14ca to the inner side in the width direction P of the arm shank 12. Therefore, in the inward bending type wiper arm 11, the open parts (the parts where walls are not formed and where the tubes 20 and 21 are attached with respect to the holding parts 14c) of the holding parts 14c including the first wall parts 14ca and the second wall parts 14cb face the inner side (toward the center C side in the width direction P of the arm shank 12). Specifically, the open parts of the holding parts 14c face the inner side in the direction along the width direction P of the arm shank 12. In this way, like the wiper arm 11 of the first embodiment, the tube 20 or the tube 21 may be attached with respect to the holding parts 14c along the width direction P of the arm shank 12.

Further, in the wiper arm 11 shown in FIG. 6, the holding part 14c including the first wall part 14ca and the second wall part 14cb is also formed in an arc shape along the cylindrical outer peripheral shape of each of the tubes 20 and 21.

In this way, like the wiper arm 11 of the first embodiment, since the contact area of the outer peripheral surfaces of the tubes 20 and 21 with the holding parts 14c increases, the holding force for the tubes 20 and 21 by the holding parts 14c may be increased, and rattling or rotation of the tubes 20 and 21 may be reduced. As a result, the accuracy of the ejection position of the washer liquid 22 ejected from the ejection holes 20a and 21a of the tubes 20 and 21 may be further improved.

Further, in the inward bending type wiper arm 11, since the second wall part 14cb is extended to the inner side, the arm shank 12 and the second wall part 14cb do not interfere with each other. Therefore, the second wall part 14cb may be extended in the direction toward the bottom cover 14. As a result, each of the tubes 20 and 21 may be clamped between the first wall part 14ca and the second wall part 14cb in the width direction P, and the fixing force for the tubes 20 and 21 may be increased.

Further, the second wall part 14cb extends in the direction toward the bottom cover 14.

In this way, the contact area between the holding parts 14c and the outer peripheral surfaces of the tubes 20 and 21 is increased, and each of the tubes 20 and 21 is clamped between the first wall parts 14ca and the second wall parts 14cb. Therefore, the holding force for the tubes 20 and 21 by the holding parts 14c may be increased, and rattling or rotation of the tubes 20 and 21 may be reduced. As a result, the accuracy of the ejection position of the washer liquid 22 ejected from the ejection holes 20a and 21a of the tubes 20 and 21 may be further improved.

In addition, since other effects obtained by the wiper arm 11 of the second embodiment are the same as those by the wiper arm 11 of the first embodiment shown in FIG. 5, repeated descriptions are omitted.

Next, a modified example of the second embodiment will be described. FIG. 7 shows the wiper arm 11 of a modified example of the second embodiment.

The wiper arm 11 of the modified example shown in FIG. 7 has the first wall part 14ca located closer to the outer side than the hole part 14b in the width direction P of the arm shank 12, and has a through hole 14cd which communicates with the hole part 14b and penetrates to the outside and which is formed in the vicinity of the root of the first wall part 14ca.

In this way, the holes of the bottom cover 14 through which the washer liquid 22 passes are expanded by the hole parts 14b formed in the bottom cover 14 and the through holes 14cd communicating with the hole parts 14b and formed in the vicinity of the root of the first wall parts 14ca, and are widened in the direction of the side wall 12a and the side wall 12b. Therefore, even in the case where the ejection holes 20a and 21a of the tubes 20 and 21 face obliquely, the washer liquid 22 may be discharged to the outside without its ejection being hindered. In other words, the washer liquid 22 may be ejected even to directions obliquely downward of the tubes 20 and 21 and the like, and the tuning range of the ejection direction of the washer liquid 22 may be widened. Further, the washer liquid 22 may be ejected obliquely to the surface to be wiped (glass of the automobile), and the washer liquid 22 easily spreads onto the surface to be wiped; therefore, the cleaning property for the surface to be wiped may be improved.

The shape of the holding part 14c is identical to that of the wiper arm 11 shown in FIG. 6, and the holding part 14c provided on the bottom cover 14 is formed in an arc shape. That is, the holding part 14c is in a shape along the cylindrical outer peripheral shape of each of the tubes 20 and 21. Further, the second wall part 14cb extends in the direction toward the bottom cover 14.

In this way, like the wiper arm 11 shown in FIG. 6, the contact area between the holding parts 14c and the outer peripheral surfaces of the tubes 20 and 21 is increased, and the tubes 20 and 21 are clamped between the first wall parts 14ca and the second wall parts 14cb of the holding parts 14c. Therefore, the holding force for the tubes 20 and 21 by the holding parts 14c may be increased, and rattling or rotation of the tubes 20 and 21 may be reduced. As a result, the accuracy of the ejection position of the washer liquid 22 ejected from the ejection holes 20a and 21a of the tubes 20 and 21 may be further improved.

### (Third Embodiment)

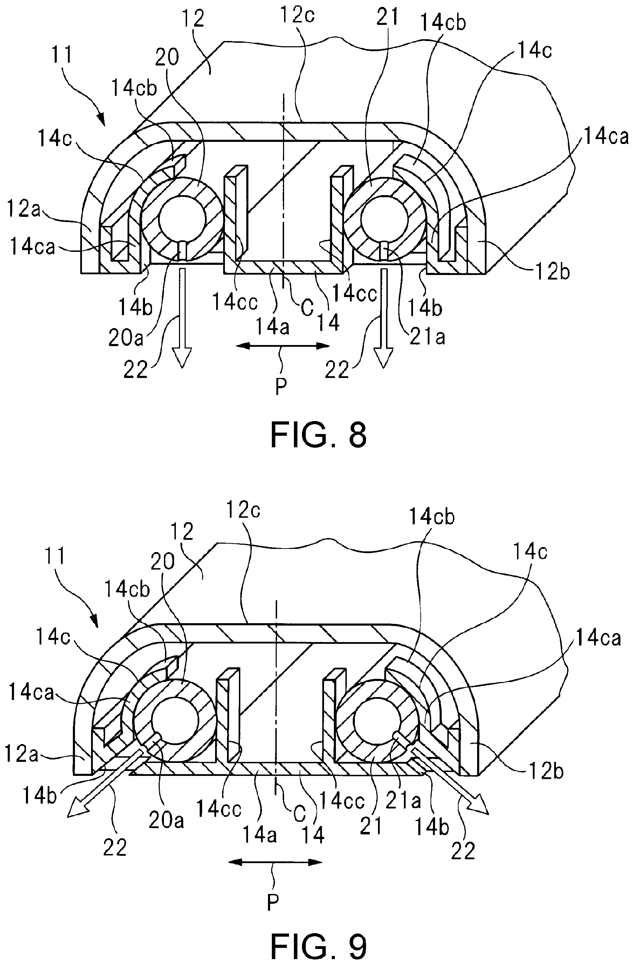

The wiper arm 11 according to a third embodiment will be described with reference to FIG. 8. In the wiper arm 11 of the third embodiment, the holding part 14c provided on the bottom cover 14 includes the first wall part 14ca provided on the body part 14a of the bottom cover 14, the second wall part 14cb joined to the first wall part 14ca, and a third wall part 14cc which is a standing wall provided on the body part 14a closer to the center C of the arm shank 12 than the hole part 14b in the width direction P of the arm shank 12.

That is, the body part 14a of the bottom cover 14 is provided with the first wall part 14ca and the third wall part 14cc as standing walls. Specifically, the holding part 14c has the first wall part 14ca, the second wall part 14cb, and the third wall part 14cc provided closer to the inner side than the hole part 14b in the width direction P of the arm shank 12. Thus, the hole part 14b is formed between the first wall part 14ca and the third wall part 14cc. In this structure, the movement of the tubes 20 and 21 in the width direction P of the wiper arm 11 is restricted by the first wall parts 14ca and the third wall parts 14cc. In other words, each of the tubes 20 and 21 may be clamped from both sides in the width direction P, and the fixing force for the tubes 20 and 21 may be increased.

In the wiper arm 11 shown in FIG. 8, the first wall part 14ca is provided at a position between the hole part 14b and the side wall 12a or at a position between the hole part 14b and the side wall 12b. Further, the second wall part 14cb has one end joined to the first wall part 14ca and the other end protruding toward the third wall part 14cc. That is, the second wall part 14cb protrudes to the inner side, and the wiper arm 11 shown in FIG. 8 is an inward bending type wiper arm 11.

In the inward bending type wiper arm 11, it is preferable from the viewpoint of holding the tubes 20 and 21 that another standing wall is provided closer to the inner side than the first wall part 14ca. Therefore, in the wiper arm 11 of the third embodiment, the third wall part 14cc is provided on the body part 14a of the bottom cover 14 as another standing wall closer to the center C of the arm shank 12 than the first wall part 14ca and the hole part 14b in the width direction P.

In this way, each of the tubes 20 and 21 may be held by the first wall part 14ca, the second wall part 14cb, and the third wall part 14cc, and the fixing force for each of the tubes 20 and 21 may be increased.

Further, the holding part 14c including the first wall part 14ca and the second wall part 14cb is formed in an arc shape along the cylindrical outer peripheral shape of each of the tubes 20 and 21. In this way, since the contact area of the outer peripheral surfaces of the tubes 20 and 21 with the holding parts 14c increases, the holding force for the tubes 20 and 21 by the holding parts 14c may be further increased, and rattling or rotation of the tubes 20 and 21 may be reduced. As a result, the accuracy of the ejection position of the washer liquid 22 ejected from the ejection holes 20a and 21a of the tubes 20 and 21 may be further improved.

In addition, since other effects obtained by the wiper arm 11 of the third embodiment are the same as those by the wiper arm 11 of the second embodiment shown in FIG. 6, repeated descriptions are omitted.

Next, a first modified example of the third embodiment will be described. FIG. 9 shows the wiper arm 11 of the first modified example of the third embodiment.

The wiper arm 11 of the first modified example shown in FIG. 9 is also an inward bending type wiper arm 11 like the wiper arm 11 shown in FIG. 8, and has the first wall part 14ca located closer to the outer side than the hole part 14b in the width direction P of the arm shank 12, and has the through hole 14cd which communicates with the hole part 14b and penetrates to the outside and which is formed in the vicinity of the root of the first wall part 14ca.

In this way, the holes of the bottom cover 14 through which the washer liquid 22 passes are expanded by the hole parts 14b formed in the bottom cover 14 and the through holes 14cd communicating with the hole parts 14b and formed in the vicinity of the root of the first wall parts 14ca, and are widened in the direction of the side wall 12a and the side wall 12b. Therefore, even in the case where the ejection holes 20a and 21a of the tubes 20 and 21 face obliquely, the washer liquid 22 may be discharged to the outside without its ejection being hindered. In other words, the washer liquid 22 may be ejected even to directions obliquely downward of each of the tubes 20 and 21 and the like, and the tuning range of the ejection direction of the washer liquid 22 may be widened. Further, the washer liquid 22 may be ejected obliquely to the surface to be wiped (glass of the automobile), and the washer liquid 22 easily spreads onto the surface to be wiped; therefore, the cleaning property for the surface to be wiped may be improved.

In addition, in the inward bending type wiper arm 11, when the first wall part 14ca which is a standing wall is provided on the outer side of each of the tubes 20 and 21, and the hole part 14b of the bottom cover 14 is located on the inner side of the first wall part 14ca, then the first wall part 14ca becomes a hindrance, and the washer liquid 22 is less likely to come out of the wiper arm 11.

Therefore, in the wiper arm 11 shown in FIG. 9, inside the arm shank 12, each of the ejection holes 20a and 21a of the two tubes 20 and 21 provided side by side with respect to the extending direction of the bottom cover 14 are in a state of facing the through holes 14cd communicating with the hole parts 14b.

In this way, even in the inward bending type wiper arm 11, the washer liquid 22 may be ejected toward the outer side obliquely downward of the wiper arm 11.

In addition, since other effects obtained by the wiper arm 11 of the first modified example of the third embodiment are the same as those by the wiper arm 11 of the third embodiment shown in FIG. 8, repeated descriptions are omitted.

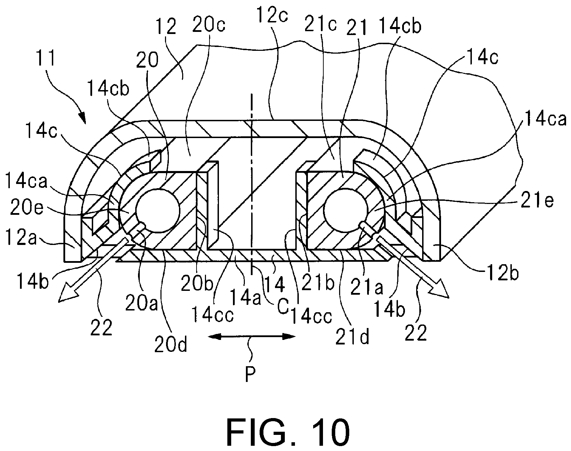

Next, a second modified example of the third embodiment will be described. FIG. 10 shows the wiper arm 11 of the second modified example of the third embodiment.

In the wiper arm 11 of the second modified example shown in FIG. 10, each of the tubes 20 and 21 includes flat surfaces 20b and 21b that are in contact with the third wall parts 14cc. That is, in the tube 20, a part is an arc-shaped part 20e formed in an arc shape, and three surfaces of a part of the outer peripheral surface other than the arc-shaped part 20e are flat surfaces 20b, 20c and 20d. In addition, the ejection holes 20a are formed in the arc-shaped part 20e. Further, in the tube 21, like the tube 20, a part is an arc-shaped part 21e formed in an arc shape, and three surfaces of a part of the outer peripheral surface other than the arc-shaped part 21e are flat surfaces 21b, 21c and 21d. In addition, like the tube 20, the ejection holes 21a are formed in the arc-shaped part 21e.

Further, in the tube 20, the flat surface 20b located on the side opposite to the arc-shaped part 20e of the tube 20 is in contact with the third wall part 14cc, and in the tube 21, the flat surface 21b located on the side opposite to the arc-shaped part 21e of the tube 21 is in contact with the third wall part 14cc.

Since the flat surfaces 20b and 21b of the tubes 20 and 21 are in contact with the third wall parts 14cc, the tubes 20 and 21 may be prevented from rotating in the circumferential direction. Further, since the third wall part 14cc is provided on the inner side of each of the tubes 20 and 21, even in the inward bending type wiper arm 11, each of the tubes 20 and 21 is clamped by the first wall part 14ca and the third wall part 14cc. Therefore, rattling of the tubes 20 and 21 in the width direction P of the wiper arm 11 may be prevented.

In addition, since other effects obtained by the wiper arm 11 of the second modified example are the same as those by the wiper arm 11 of the third embodiment shown in FIGs. 8 and 9, repeated descriptions are omitted.

The disclosure is not limited to the above embodiments. For example, in the above embodiments, it is disclosed that the wiper arm is applied to the rear wiper device for wiping the surface to be wiped such as the rear glass of a vehicle such as an automobile, but the disclosure is not limited thereto, and the wiper arm may be applied to a wiper device mounted on the front side of a vehicle such as an automobile or to a wiper device mounted on a ship, an aircraft, a railway vehicle, or the like.

Further, in the above embodiments, the case where two tubes are provided inside the arm shank has been described, but the number of tubes provided inside the arm shank may be one or may be three or more.

Further, in the case where the holding parts for holding the tubes are provided on the bottom cover in two rows, the two rows of the holding parts may be disposed side by side instead of being alternately disposed. Moreover, the number of holding parts in one row may be at least one.

### Description of Reference Numerals

10: Wiper device
11: Wiper arm
12: Arm shank (shank)
12a: Side wall
12b: Side wall
12c: Top wall
13: Arm head
14: Bottom cover
14a: Body part
14b: Hole part
14c: Holding part
14ca: First wall part
14cb: Second wall part
14cc: Third wall part
14cd: Through hole
15: Wiper blade
16: Blade rubber
17: Tube holder
18: Tip nozzle
18a: Ejection hole
19: Spring
20: Tube
20a: Ejection hole
20b, 20c, 20d: Flat surface
20e: Arc-shaped part
21: Tube
21a: Ejection hole
21b, 21c, 21d: Flat surface
21e: Arc-shaped part
22: Washer liquid
C: Center
P: Width direction

## Claims

1. A wiper arm (11), comprising:
an arm head (13);
a shank (12), comprising:
a pair of side walls (12a, 12b) connected to a tip end of the arm head (13) and facing each other; and
a top wall (12c) connected to an upper end part of each of the side walls (12a, 12b);
a tube (20, 21) disposed inside the shank (12); the wiper arm being **characterised in that** the shank further comprises:
a bottom cover (14) joined to a lower end part of each of the side walls (12a, 12b) and facing the top wall (12c),
wherein the bottom cover (14) comprises:
a body part (14a) in a plate shape; and
a holding part (14c) which is provided in a protruding way on an edge of a hole part (14b) formed in the body part (14a) in a width direction (P) of the shank (12) and which holds the tube (20, 21), and
the holding part (14c) comprises:
a first wall part (14ca) which is provided at the edge and which protrudes toward the top wall (12c); and
a second wall part (14cb) which is connected to the first wall part (14ca) and which is disposed above the hole part (14b).

2. The wiper arm according to claim 1, wherein the tube (20, 21) has an ejection hole (20a, 21a) for ejecting a washer liquid (22), and
the ejection hole (20a, 21a) is disposed at a position facing the hole part (14b).

3. The wiper arm according to claim 1 or claim 2, wherein the first wall part (14ca) is provided closer to an inner side than the hole part (14b) in the width direction (P) of the shank (12), and
the second wall part (14cb) extends from the first wall part (14ca) to an outer side in the width direction (P) of the shank (12).

4. The wiper arm according to claim 1 or claim 2, wherein the first wall part (14ca) is provided closer to an outer side than the hole part (14b) in the width direction (P) of the shank (12), and
the second wall part (14cb) extends from the first wall part (14ca) to an inner side in the width direction (P) of the shank (12).

5. The wiper arm according to claim 4, wherein the holding part (14c) has the first wall part (14ca), the second wall part (14cb), and a third wall part (14cc) provided closer to the inner side than the hole part (14b) in the width direction (P) of the shank (12), and
the hole part (14b) is formed between the first wall part (14ca) and the third wall part (14cc).

6. The wiper arm according to claim 5, wherein a through hole (14cd) which communicates with the hole part (14b) is formed in one of the first wall part (14ca) and the third wall part (14cc) that is located on the outer side in the width direction (P) of the shank (12).

7. The wiper arm according to claim 5 or claim 6, wherein the tube (20, 21) comprises a flat surface (20b, 21b) which is in contact with the third wall part (14cc).

## Patentansprüche

1. Wischerarm (11), umfassend:
einen Armkopf (13);
einen Schaft (12), umfassend:
ein Paar von Seitenwänden (12a, 12b), die mit einem Spitzenende des Armkopfes (13) verbunden sind und einander gegenüberliegen; und
eine obere Wand (12c), die mit einem oberen Endteil jeder der Seitenwände (12a, 12b) verbunden ist;
ein Rohr (20, 21), das im Inneren des Schaftes (12) angeordnet ist, wobei der Wischerarm **dadurch gekennzeichnet ist, dass** er weiterhin umfasst:
eine untere Abdeckung (14), die mit einem unteren Endteil jeder der Seitenwände (12a, 12b) zusammengefügt ist und der oberen Wand (12c) gegenüberliegt,
wobei die untere Abdeckung (14) umfasst:
ein Körperteil (14a) in Form einer Platte; und
ein Halteteil (14c), das in einer vorstehenden Weise an einem Rand eines Lochteils (14b) bereitgestellt ist, das in dem Körperteil (14a) in einer Breitenrichtung (P) des Schafts (12) ausgebildet ist und das das Rohr (20, 21) hält, und
der Halteteil (14c) umfasst:
einen ersten Wandteil (14ca), der an dem Rand bereitgestellt ist und der in Richtung der oberen Wand (12c) vorsteht; und
einen zweiten Wandteil (14cb), der mit dem ersten Wandteil (14ca) verbunden ist und der oberhalb des Lochteils (14b) angeordnet ist.

2. Wischerarm gemäß Anspruch 1, wobei das Rohr (20, 21) ein Ausstoßloch (20a, 21a) zum Ausstoßen einer Waschflüssigkeit (22) aufweist, und
das Ausstoßloch (20a, 21a) an einer Position angeordnet ist, die dem Lochteil (14b) gegenüberliegt.

3. Wischerarm gemäß Anspruch 1 oder Anspruch 2, wobei der erste Wandteil (14ca) näher an einer Innenseite als der Lochteil (14b) in der Breitenrichtung (P) des Schaftes (12) bereitgestellt ist, und
der zweite Wandteil (14cb) sich von dem ersten Wandteil (14ca) zu einer Außenseite in der Breitenrichtung (P) des Schaftes (12) erstreckt.

4. Wischerarm gemäß Anspruch 1 oder Anspruch 2, wobei der erste Wandteil (14ca) näher an einer Außenseite als der Lochteil (14b) in der Breitenrichtung (P) des Schafts (12) bereitgestellt ist, und
der zweite Wandteil (14cb) sich von dem ersten Wandteil (14ca) zu einer Innenseite in der Breitenrichtung (P) des Schaftes (12) erstreckt.

5. Wischerarm gemäß Anspruch 4, wobei der Halteteil (14c) den ersten Wandteil (14ca), den zweiten Wandteil (14cb) und einen dritten Wandteil (14cc) aufweist, näher bereitgestellt an der Innenseite als der Lochteil (14b) in der Breitenrichtung (P) des Schaftes (12), und
der Lochteil (14b) zwischen dem ersten Wandteil (14ca) und dem dritten Wandteil (14cc) ausgebildet ist.

6. Wischerarm gemäß Anspruch 5, wobei ein Durchgangsloch (14cd), das mit dem Lochteil (14b) in Verbindung steht, in einem des ersten Wandteils (14ca) und des dritten Wandteils (14cc) ausgebildet ist, der sich an der Außenseite in der Breitenrichtung (P) des Schafts (12) befindet.

7. Wischerarm gemäß Anspruch 5 oder Anspruch 6, wobei das Rohr (20, 21) eine ebene Fläche (20b, 21b) umfasst, die in Kontakt mit dem dritten Wandteil (14cc) steht.

## Revendications

1. Bras d'essuie-glace (11), comprenant :
une tête de bras (13) ;
une tige (12), comprenant :
une paire de parois latérales (12a, 12b) reliées à une extrémité de pointe de la tête de bras (13) et se faisant face ; et
une paroi supérieure (12c) reliée à une partie d'extrémité supérieure de chacune des parois latérales (12a, 12b) ;
un tube (20, 21) disposé à l'intérieur de la tige (12) ; le bras d'essuie-glace étant **caractérisé en ce que** la tige comprend en outre :
un couvercle inférieur (14) joint à une partie d'extrémité inférieure de chacune des parois latérales (12a, 12b) et faisant face à la paroi supérieure (12c),
dans lequel le couvercle inférieur (14) comprend :
une partie de corps (14a) en forme de plaque ; et
une partie de maintien (14c) qui est prévue de manière saillante sur un bord d'une partie de trou (14b) formée dans la partie de corps (14a) dans une direction de largeur (P) de la tige (12) et qui maintient le tube (20, 21), et
la partie de maintien (14c) comprend :
une première partie de paroi (14ca) qui est prévue au niveau du bord et qui dépasse en saillie vers la paroi supérieure (12c) ; et
une deuxième partie de paroi (14cb) qui est reliée à la première partie de paroi (14ca) et qui est disposée au-dessus de la partie de trou (14b).

2. Bras d'essuie-glace selon la revendication 1, dans lequel le tube (20, 21) comporte un trou d'éjection (20a, 21a) pour éjecter un liquide lave-glace (22), et
le trou d'éjection (20a, 21a) est disposé à une position faisant face à la partie de trou (14b).

3. Bras d'essuie-glace selon la revendication 1 ou la revendication 2, dans lequel la première partie de paroi (14ca) est prévue plus près d'un côté intérieur que la partie de trou (14b) dans la direction de la largeur (P) de la tige (12), et
la deuxième partie de paroi (14cb) s'étend depuis la première partie de paroi (14ca) vers un côté extérieur dans la direction de la largeur (P) de la tige (12).

4. Bras d'essuie-glace selon la revendication 1 ou la revendication 2, dans lequel la première partie de paroi (14ca) est prévue plus près d'un côté extérieur que la partie de trou (14b) dans la direction de la largeur (P) de la tige (12), et
la deuxième partie de paroi (14cb) s'étend depuis la première partie de paroi (14ca) vers un côté intérieur dans la direction de la largeur (P) de la tige (12).

5. Bras d'essuie-glace selon la revendication 4, dans lequel la partie de maintien (14c) a la première partie de paroi (14ca), la deuxième partie de paroi (14cb) et une troisième partie de paroi (14cc) prévues plus près vers le côté intérieur que la partie de trou (14b) dans le sens de la largeur (P) de la tige (12), et
la partie de trou (14b) est formée entre la première partie de paroi (14ca) et la troisième partie de paroi (14cc) .

6. Bras d'essuie-glace selon la revendication 5, dans lequel un trou traversant (14cd) qui communique avec la partie de trou (14b) est formé dans l'une de la première partie de paroi (14ca) et de la troisième partie de paroi (14cc) qui est située sur le côté extérieur dans le sens de la largeur (P) de la tige (12) .

7. Bras d'essuie-glace selon la revendication 5 ou la revendication 6, dans lequel le tube (20, 21) comprend une surface plane (20b, 21b) qui est en contact avec la troisième partie de paroi (14cc).
